# EUROPEAN PATENT SPECIFICATION

(11) **EP 4 148 910 B1**
(45) Date of publication and mention of the grant of the patent: **19.11.2025**
(21) Application number: 22195273.2
(22) Date of filing: 13.09.2022
(51) Int. Cl.: H01R 4/34, H01R 11/26, H01R 13/6581, B60R 16/00, H02G 3/00

(54) **HIGH-CURRENT CONNECTION CLAMPING SCREW DEVICE AS WELL AS ELECTRICAL HIGH-CURRENT CONNECTOR AND HIGH-CURRENT LINE CONNECTOR**
HOCHSTROM-VERBINDUNGS-KLEMMSCHRAUBENVORRICHTUNG SOWIE ELEKTRISCHER HOCHSTROMVERBINDER UND HOCHSTROMLEITUNGSVERBINDER
DISPOSITIF DE VIS DE SERRAGE DE CONNEXION À COURANT ÉLEVÉ AINSI QUE CONNECTEUR ÉLECTRIQUE À COURANT ÉLEVÉ ET CONNECTEUR DE LIGNE À COURANT ÉLEVÉ

(30) Priority: 13.09.2021 DE 102021123635
(43) Date of publication of application: 15.03.2023
(60) Divisional application: 24176110.5
(73) Proprietor: TE Connectivity Germany GmbH, 64625 Bensheim (DE)
(72) Inventor: WOLFSCHMITT, Heiko, 64625 Bensheim (DE); FORELL, Richard A., 64625 Bensheim (DE); SCHNEIDER, Joachim, 64625 Bensheim (DE); BALLES, Wolfgang, 64625 Bensheim (DE); SAENGER, Walter, 64625 Bensheim (DE); EHEIM, Manuel, 64625 Bensheim (DE)
(74) Representative: Patentanwaltskanzlei WILHELM & BECK

(56) References cited:
- CN-U- 206 650 178
- DE-A1- 102015 216 543
- GB-A- 2 588 769
- US-A1- 2007 207 652
- US-A1- 2012 231 676
- US-A1- 2018 294 600
- US-B2- 7 306 475

## Description

The invention relates to a mechanical high-current connection clamping screw device and the use of a mechanical high-current connection clamping screw device, for an electrical high-current connector in particular for the automotive sector. In addition, the invention relates to an electrical high-current connector for a high-current line consisting of copper or aluminium, to an electrical high-current line connector, as well as to an electrical entity, in each case for the automotive sector.

In the electrical sector (electrics, electrical engineering, electrical power engineering etc.) beyond ground-based electrical power engineering and its analogues, a large number of electrical line connectors are known which serve the purpose of transmitting electrical currents and voltages in the medium- or high-current or -voltage range. In this case, the line connectors, for example for a power supply and/or a distribution of electrical energy in warm, possibly hot, contaminated, humid and/or chemically aggressive environments, in the short term and/or permanently ensure problem-free transmission of electrical energy. Owing to a wide range of applications, a large number of such line connectors are known in the non-automotive sector and in the automotive sector.

Such high-current line connectors can be installed, for example, on/in an electrical entity, such as, for example, a rechargeable battery or a rechargeable battery module, or a (traction) battery or a battery module; an inverter; a switchgear assembly etc. - High fuel costs and efforts to reduce environmental impact make, for example in the automotive sector, hybrid or electric vehicles necessary. One aspect of these vehicles is handling of high electrical charging and operating currents and/or voltages, wherein the components in question of the hybrid or electric vehicles need to designed correspondingly. This relates, for example, to high-current/high-voltage lines (for example stranded line, conductor bar, busbar, etc. consisting of copper or preferably aluminium) and contact devices (for example terminal fitting, flat contact, busbar etc. consisting of aluminium or preferably copper) of the line connectors.

In order to make electrical contact between an electrical entity and a high-current line connector, power electromechanical screw contact connections can be used which also meet stringent requirements. A mechanical path can be functionally separated from an electrical path by means of such a high-current screw contact connection. The mechanical path serves to transmit the mechanical tensile stresses of a screw fitting, in particular a steel-steel screw fitting, and the electrical path is used as a low-resistance electrical contact connection, in particular a copper-copper connection, of the high-current screw contact connection. - For example CN 206 650 178 U, GB 2 588 769 A, US 2018/0294600 A1, US 2012/0231676 A1, DE 10 2015 216 543 A1 and US 2007/0207652 A1 disclose such power electromechanical screw contact connections.

As a result, a robust and, in the typical manufacturing environment, easily handleable electrical high-current screw contact connection is provided. In addition, such a high-current screw contact connection is easily separable (diagnosis, recycling) and at the same time shockproof. Such high-current screw contact connections can be used in a variety of ways and flexibly for making contact with battery modules and for other connection points in various termination panels of an electrical power architecture. - Efforts are continually being made to improve electrical high-current line connectors, in particular to design them to be more effective and to in the process make them cost-effective. It is therefore an object of the invention to specify an improved high-current screw contact connection.

The object of the invention is achieved by means of a mechanical high-current connection clamping screw device for an electrical high-current connector, by a use of a mechanical high-current connection clamping screw device for screwing an electrical high-current connector to an electrical high-current mating connector, by means of an electrical high-current connector for a high-current line consisting of copper or aluminium, by means of an electrical high-current line connector, and by means of an electrical entity, in each case for the automotive sector, in accordance with the independent claims. - Advantageous developments, additional features and/or advantages of the invention can be gleaned from the dependent claims and the following description.

The 'holes' unavoidably resulting in a screwable connection in layers of a construction of an electrical high-current connector of a high-current line connector have possibly proven to be a problem, depending on the application. In accordance with the invention, this is solved by means of and/or by the use of a mechanical (high-current connection) clamping screw device according to the invention, i. e., apart from the resultant holes.

The clamping screw device of the invention is according to claim 1. It comprises a clamping screw which extends in an axial direction of the clamping screw device and is divided up into a rotatable screw head, a screwable screw body and preferably a screw foot, wherein the screw head comprises an electrical insulation on the outside, which comprises a seal, wherein the screw head is embedded in the electrical insulation which comprises a circumferential surface on which the seal is directly or indirectly arranged radially outwards. - In this case, the electrical insulation can surround the screw head substantially completely or completely in a circumferential direction of the clamping screw device.

These 'holes', which were responsible in particular for an undesired transfer of material are 'plugged'. This is achieved in particular without an additional production step or an additional separate component part, i. e. without an additional assembly step or no additional element needs to be assembled. It is sufficient to design an already existing clamping screw device in accordance with the invention. The clamping screw device can in this case be manufactured in a single, automatable production step, for example in an injection-moulding machine. In this case, possibly a housing of the high-current connector needs to be adapted, but this is likewise managed without an additional production step and an additional component part.

According to the invention, the screw head is embedded in the electrical insulation. In this case, the electrical insulation can extend substantially completely or completely in the axial direction of the screw head. The electrical insulation comprises a circumferential surface, on which the seal is directly or indirectly arranged radially outwards. In this case, the circumferential surface, which further extends in the axial direction, can be designed to be oval, elliptical or circular on the electrical insulation. The electrical insulation can be injection-moulded on the outside onto the screw head. The screw head can comprise an outer profile or an inner profile for a screwdriving tool. The screw head can sit fixedly in the electrical insulation.

The seal can be in the form of a ring seal or sleeve seal having preferably at least one sealing lip. Preferably, the seal is in the form of an elastomer seal. The seal can be injection-moulded onto the electrical insulation. Preferably, the clamping screw is produced from a metal or a metal alloy and in particular from a steel. In addition, the electrical insulation is preferably produced from a plastic.

The screw head can comprise a chin, by means of which an electrical high-current contact device of the high-current connector can be clamped mechanically. In this case, a force transfer of the screw head onto the contact device takes place via the chin, which is usually in the form of a ring face. - The screw body can comprise a substantially smooth screw shank and a threaded shank axially adjoining the said screw shank. In this case, the threaded shank can comprise an external thread (preferred) or an internal thread.

The threaded shank or the screw foot can comprise a touch guard which protrudes away from the threaded shank. In this case, the screw foot can be in the form of a free longitudinal end section of the threaded shank and comprise, for example, a recess, into which the touch guard, which protrudes away from the threaded shank and the screw foot, is inserted. Preferably, the touch guard can be injection-moulded onto the threaded shank and/or onto the screw foot or injection-moulded around the screw foot. The touch guard is naturally preferably formed from plastic.

In one embodiment: the screw head can comprise (only) an outer profile (for example an outer n-sided profile or an analogue thereof), possibly an electromagnetic shielding can be arranged at the front end and radially outwards on the electrical insulation of the outer profile, the electrical insulation can comprise a radially outer circumferential wall (form), the circumferential wall can be spaced apart with respect to the outer profile and possibly with respect to the electromagnetic shielding of the outer profile, possibly the electromagnetic shielding can cover the circumferential wall at least on one side or on both sides (relatively large areas), and/or possibly the seal can be arranged radially outwards on the circumferential wall or radially outwards on the electromagnetic shielding.

In one embodiment: the screw head can comprise an inner profile (for example an inner n-sided profile or an analogue thereof), possibly an electromagnetic shielding can be arranged at the front end and radially inwards on the electrical insulation of the inner profile, the electrical insulation can comprise a radially outer circumferential wall (side), this circumferential wall can be spaced apart with respect to the inner profile and possibly with respect to the electromagnetic shielding of the inner profile, possibly the electromagnetic shielding can cover the circumferential wall at least sectionally, and/or possibly the seal can be arranged radially outwards on the circumferential wall or on the electromagnetic shielding.

The high-current connector according to the invention comprises a (mechanical high-current connection) clamping screw device and an (electrical high-current) contact device for making electrical contact with an (electrical high-current) mating contact device, and the contact device can be clamped mechanically against the mating contact device by means of the clamping screw device, wherein the clamping screw device of the high-current connector is designed in accordance with the invention.

In particular, the high-current (plug-type) connector can be used in a hybrid or electric vehicle, i. e., a motor vehicle having an electric traction engine, for transport of electrical energy. In this case, the high-current connector can be used in particular for the transport of energy to the (traction) battery of the vehicle (charging, charging operating mode, recuperation operating mode) and/or from the battery ((electric) travelling operating mode, recuperation operating mode). The contact device can preferably be in the form of a busbar.

The contact device can comprise an electrical contact section for a high-current line, a mechanical clamping section and an electrical contact section with a contacting surface. In this case, the contact device can in particular be designed to be angled, wherein the contact section for the high-current line and the clamping section adjoin one another integrally primarily or substantially in one direction (possibly including a step), wherein the contact section protrudes substantially perpendicularly with the contacting surface away from the clamping section. The contact section is in this case preferably designed to be substantially hollow-cylindrical, wherein the clamping screw device extends through the contact section. The free end side of this (as far as possible) thick hollow cylinder forms the contacting surface.

The high-current connector can comprise a housing with a through recess for inserting the clamping screw device. The electrically insulating housing is naturally preferably formed from plastic. An electromagnetic shielding of the high-current connector can be arranged on an electrically insulating cladding (housing) of the contact device. The electrically insulating cladding is naturally preferably formed from plastic. The electrically insulating cladding can comprise two cladding parts, which each comprise a shield part of the electromagnetic shielding on the outside. In this case, the cladding parts can be in the form of an upper cladding part and a lower cladding part, and the shield parts can similarly be in the form of an upper shield part and a lower shield part. The two cladding parts can be latched to one another, and the two shield parts are in electrically conductive contact with one another.

The seal of the clamping screw device can be capable of being or can be brought into sealing contact with an inner side of the through recess. As an alternative or else in addition, a seal can be capable of being or can be brought into sealing contact on the inside of the through recess and on an outside of the clamping screw device. The clamping screw device can be accommodated in the through recess in the housing in anti-loss fashion. The housing can comprise two housing parts, between which the contact device with its electrically insulating cladding and the electromagnetic shielding is accommodated. In this case, the housing parts can be in the form of two housing side parts, wherein the housing parts or the housing side parts are latched to one another. The through recess in the housing can be capable of being covered by a protective cap, wherein the protective cap can be in the form of a protective cap slider bearing-mounted on the housing.

The high-current connector can be designed for permanent electrical currents of at least approximately: 100A, 200A, 300A, 400A, 500A, 750A, 1kA or 1.25kA. In this case, the high-current connector can further be configured in such a way that it can withstand in each case markedly higher, short-term, electrical currents (for example dynamic drive mode, approximately: +175%, +200%, +250%, +300%, +350%, +400%, +500%). The high-current connector can be designed for electrical voltages of at least approximately: 200V, 300V, 400V, 500V, 600V, 750V, 1kV, 1.25kV, 1.5kV, 1.75kV or 2 kV. In this case, the high-current connector can further be configured in such a way that it can withstand in each case markedly higher, short-term, electrical voltages (for example dynamic drive mode, approximately: +175%, +200%, +250%, +300%, +350%, +400%, +500%).

The high-current connector can meet, for example in accordance with LV 214 or an analogue, the vibration requirements of the class or in accordance with the degree of severity: 2, 3 and/or 4. In particular, the vibration requirement of the class or in accordance with degree of severity 3 is met by means of the high-current connector. In addition, it may be possible for the high-current connector, for example in accordance with LV 214 or an analogue, to not meet the vibration requirements of the class or in accordance with degree of severity: 4 and/or higher. - The high-current connector is preferably designed for a use temperature of approximately - 40°C to approximately: 80°C, 100°C, 120°C, 140°C, 150°C, 160°C, 170°C or 180°C.

The (high-current) line connector according to the invention comprises at least one mechanical (high-current connection) clamping screw device according to the invention and/or at least one electrical high-current connector according to the invention. In this case, a single longitudinal end section or both longitudinal end sections of a high-current line connection or of a high-current line can comprise a high-current connector according to the invention. In addition, in the first case, a second longitudinal end section can comprise another high-current connector, such as, for example, a socket for an inlet etc. - The high-current connector or the line connector is a flexibly usable, compact, robust and touch-safe solution for making contact with and for connecting battery modules and further high-current connection points apart from a battery.

The contact device can comprise the electrical high-current line at its contact section. An electromagnetic connection between the contact section and the high-current line is preferably a materially integral one. It is also possible to form the contact section or the contact device integrally with the high-current line. The electromagnetic shielding of the high-current connector can shield a connecting region of the contact section of the contact device with the electrical high-current line. In addition, the line connector can comprise precisely two electrical high-current connectors according to the invention, wherein possibly also more than two can be used.

The high-current line can be embedded in an electromagnetically shielded high-current line connection. In addition, the electromagnetic shielding of the high-current connector can be in electrically conductive contact with an electromagnetic shielding of the high-current line. Furthermore, an electrical outer insulation of the high-current line can be sealed with respect to the housing and fixed by means of latching means.

The entity according to the invention comprises a mechanical (high-current connection) clamping screw device according to the invention, an electrical high-current connector according to the invention and/or an electrical (high-current) line connector according to the invention. In this case, the entity can be in the form of, for example, a power electrics unit, a power electrics device, a power electrics module, a power electrics apparatus, a power electrics installation, a power electrics system, a module of a rechargeable electric battery or of an electric battery, a rechargeable electric battery or an electric battery, a power electrics inverter (for front-wheel drive and/or rear-wheel drive), a power electrics switchgear assembly, etc. In this case, the line connector can be arranged, for example, between two such entities.

The invention is explained in greater detail below on the basis of exemplary embodiments with reference to the appended schematic drawing which are not to scale. Sections, elements, component parts, units, components and/or patterns which have an identical, unique or analogous configuration and/or function are identified by the same reference symbols in the description of the figures (see below), the list of reference symbols, the patent claims and in the figures (figs) of the drawing. A possible alternative which is not explained in the description of the invention (see above), is not illustrated in the drawing and/or is not definitive, a static and/or kinematic reversal, a combination etc. with respect to the exemplary embodiments of the invention or a component, a pattern, a unit, a component part, an element or a section thereof, can further be gleaned from the list of reference symbols and/or the description of the figures.

In the case of the invention, a feature (section, element, component part, unit, component, function, variable etc.) can be of positive configuration, that is to say present, or of negative configuration, that is to say absent. In this specification (description (description of the invention (see above), description of the figures (see below)), list of reference symbols, patent claims, drawing), a negative feature is not explained explicitly as a feature if value is not placed on it being absent according to the invention. That is to say, the invention which is actually made and is not constructed by way of the prior art consists in omitting the said feature.

A feature of this specification can be used not only in a specified manner and/or way, but rather also in another manner and/or way (isolation, combination, replacement, addition, on its own, omission, etc.). In particular, it is possible, in the description, the list of reference symbols, the patent claims and/or the drawing, to replace, add or omit a feature in the patent claims and/or the description on the basis of a reference symbol and a feature which is assigned to it, or vice versa. Furthermore, a feature in a patent claim can be interpreted and/or specified in greater detail as a result.

The features of the description can also be interpreted as optional features (in view of the (initially mostly unknown) prior art); that is to say, each feature can be considered to be an optional, arbitrary or preferred feature, that is to say a feature which is not mandatory. Therefore, a separation of a feature, possibly including its periphery, from an exemplary embodiment is possible, it then being possible for the said feature to be transferred to a generalized inventive concept. The absence of a feature (negative feature) in an exemplary embodiment shows that the feature is optional in relation to the invention. In addition, in the case of a type term for a feature, a generic term for the feature can also be implicitly understood (possibly further hierarchical breakdown into subgenus, etc.), as a result of which a generalization of the feature is possible, for example with consideration of equivalent effect and/or equivalence.

In the merely exemplary figures (figs):

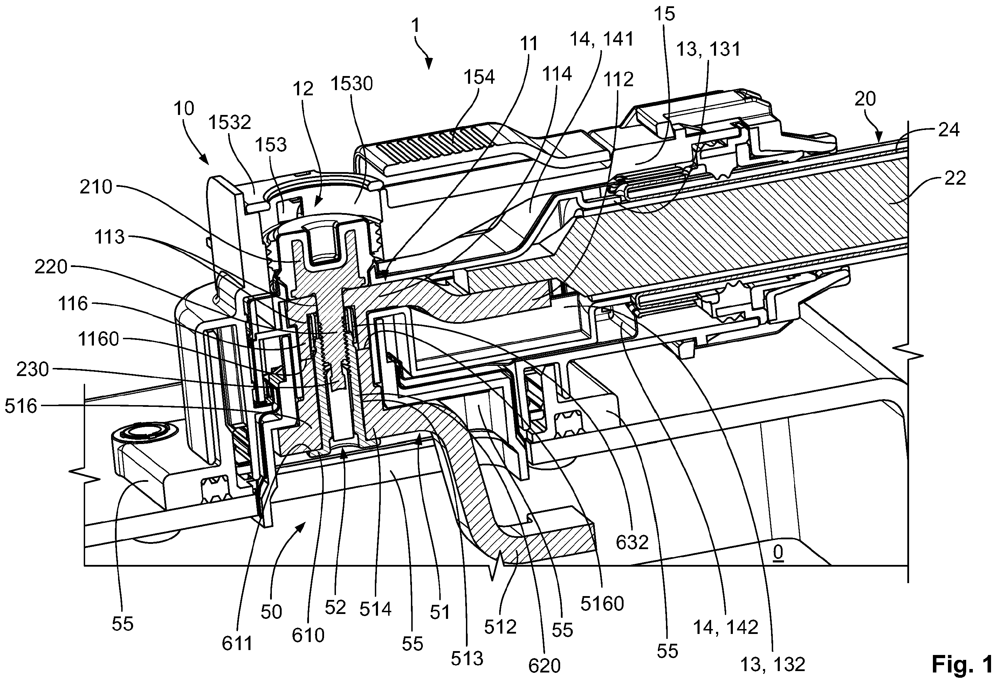

fig. 1 shows, in a centrally sectioned perspective view, an embodiment of an electrical high-current connector of an electrical high-current line connection which has been plugged together with an electrical high-current mating connector,

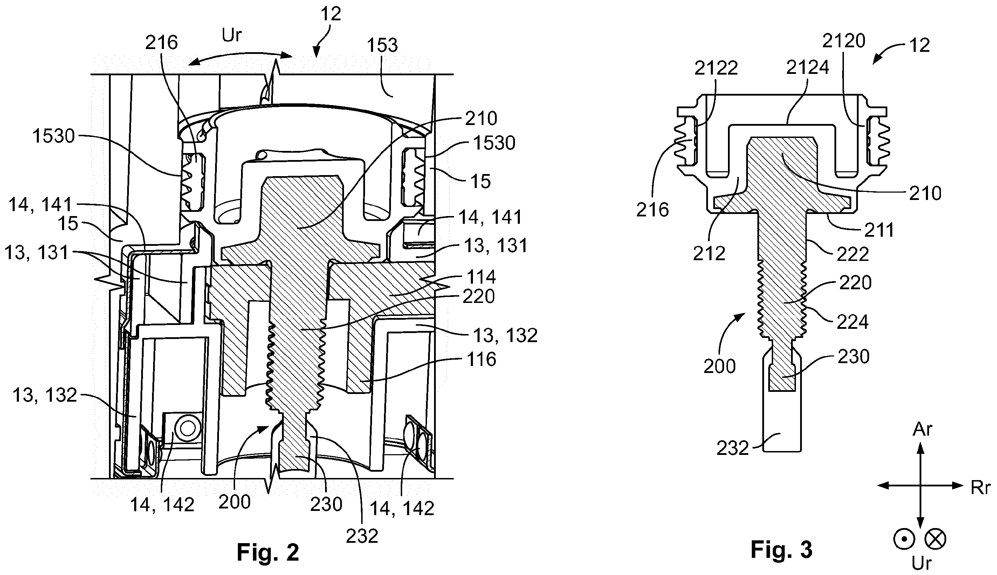

figs 2 and 3 show, in a centrally sectioned perspective view which is broken away on all sides, a first embodiment of an electrical clamping screw device in an electrical high-current connector (fig. 2) as well as, in a centrally sectioned side view, the first embodiment of the clamping screw device (fig. 3), and

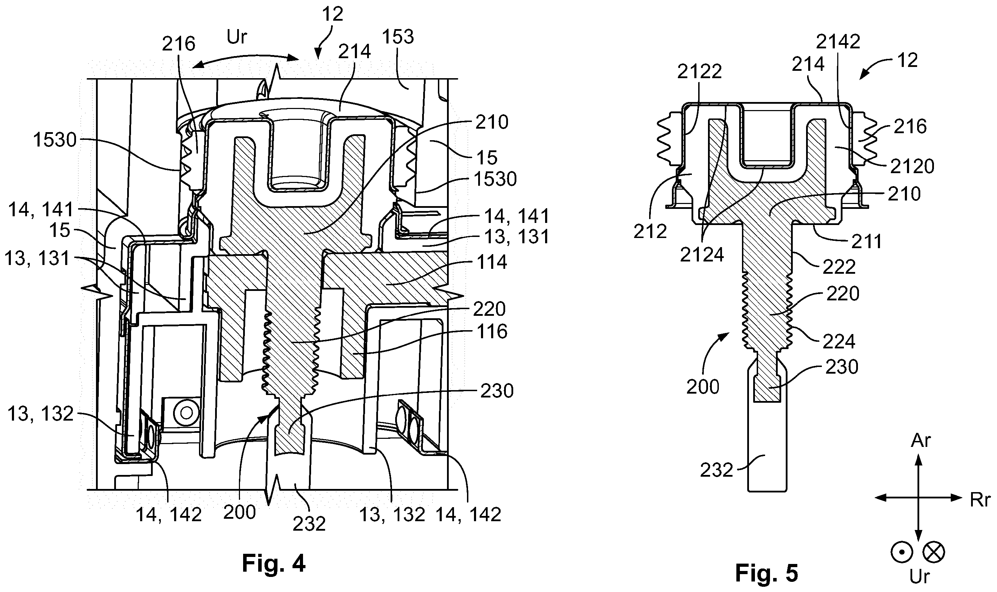

figs 4 and 5 show, in a centrally sectioned perspective view which is broken away on all sides, a second embodiment of an electrical clamping screw device in an electrical high-current connector (fig. 4) as well as, in a centrally sectioned side view, the second embodiment of the clamping screw device (fig. 5).

A (traction) battery is an indispensable part of an electrification of the drive trains of hybrid or electric vehicles. Such batteries consist of many individual cells which are each combined to form battery modules. All of the electrical energy during the operating modes of charging, travelling and recuperation must safely flow into the battery or be able to be removed from the battery via high-current line connections of these battery modules. Therefore, such line connections and their power electrics contact connections must be capable, under constricted conditions in terms of physical space, of conducting permanent currents of up to 600A and in the future even above this for several minutes during a high-power charging cycle, while in dynamic drive modes they need to carry much higher currents for seconds (at least +175% to possibly over +500%). The same applies to the electrical voltages of these currents.

In addition, such a high-current contact connection of a battery module provides a physical layer for battery protection (overtemperature protection), battery management (states of charge), cell balancing (charge balancing between battery modules), mechanical protection, etc. For this purpose, a contact connection of each individual module of the battery which has good fatigue strength but is detachable is required. Such a contact connection not only needs to be configured as an integrated system for the life of the vehicle but also needs to be robust in such a way that vibrations and temperature influences do not influence the mechanical and electrical properties of the contact connection to an impermissible extent over the life. In addition, this contact connection needs to be touch-safe in order that no risk is posed by high electrical currents and voltages in a high-voltage system such as the electrified vehicle.

The invention will be explained in more detail below with reference to exemplary embodiments of two embodiments of a variant of a mechanical high-current connection clamping screw device 12, also referred to below and above simply as clamping screw device (12) (similarly also: high-current connection mating clamping screw device 52); a high-current connector 10; and a high-current line connector 1, also referred to below and above simply as line connector (1).-Figs 2 and 3 show an embodiment according to the invention, while the embodiment according to Figs 4 and 5 does not fall within the scope of protection of the invention.

Although the invention is described and illustrated further in greater detail by way of preferred exemplary embodiments, the invention is not restricted by the disclosed exemplary embodiments, but rather is of more fundamental nature. Other variations can be derived therefrom and/or from the above (description of the invention), without departing from the scope of protection of the invention. The invention can be used in general in the electrical sector in the case of an entity (cf. above). One exception is formed here by ground-based electrical power engineering and analogues (very high to maximum electrical currents and voltages).

The drawing shows only those physical sections of an object matter which are necessary for understanding the invention. Designations such as connector and mating connector, contact device and mating contact device etc. are to be interpreted synonymously, that is to say they are possibly interchangeable in each case. The explanation of the invention with reference to the drawing relates below to an axial direction Ar (axial), a radial direction Rr (radial) and a circumferential direction Ur (tangential) of the clamping screw device 12 (cf. figs 2 to 5) and its connection partner, a mating clamping screw device 52 (cf. fig. 1).

Fig. 1 shows an entity 0 which is electrically contactable by the line connector 1: 10, (20,) ...; 10, (20,) 10; ..., (20,) 10. The entity 0 comprises, for this purpose, a high-current mating connector 50, which in this case is set up as a socket 50 on the outside on entity 0. The high-current mating connector 50 comprises, in a housing 55, a preferably solid high-current mating contact device 51 (simply mating contact device 51 below) having a mating contact section 516. The mating contact section 516 is in this case designed to be substantially hollow-cylindrical, wherein the free end side of this (as far as possible) thick (current-carrying capacity) hollow cylinder forms a mating contact-making area 5160. The mating contact device 51 preferably comprises copper or aluminium.

The mating contact section 516 protrudes in particular substantially perpendicularly away from a mechanical mating clamping section 514 of the mating contact device 51, which mating clamping section 514 preferably merges integrally with a mating contact section 512 of the mating contact device 51 for a high-current line. The mating clamping section 514 and the mating contact section 516 with the mating contact-making area 5160 comprise a (coaxial) through recess 513 (preferably with a constant diameter) in the mating contact device 51, in which a mechanical mating clamping screw device 52 can be accommodated. Other configurations of the mating contact device 51 can naturally be used.

The mating clamping screw device 52 is in this case in the form of a threaded sleeve having a mating screw head 610 and a mating screw body 620 which axially Ar adjoins the said mating screw head and has an internal thread. An external thread can naturally also be used in another embodiment. Preferably, a ring-shaped touch guard 632 is arranged on a free end of the mating screw body 620. The mating screw head 610 rests with a chin 611 opposite the mating contact section 516 on the mating clamping section 514 of the mating contact device 51 and prevents the mating clamping screw device 52 from being able to be plugged through the through recess 513 in the mating contact device 51.

Electrical contact can be made with the electrical mating contact-making area 5160 by a contacting surface 1160 of a contact section 116 of a preferably solid high-current contact device 11 (simply contact device 11 below) of the high-current connector 10. The contact section 116 protrudes in particular substantially perpendicularly away from a mechanical clamping section 114 of the contact device 11, which clamping section 114 preferably merges integrally with a contact section 112 of the contact device 11 for a high-current line 22. The contact device 11 preferably comprises copper or aluminium. The high-current line 22 can for all embodiments be in the form of, for example, a (rigid) conductor bar, a busbar, a (limitedly flexible) stranded conductor line etc. and preferably comprises aluminium or copper.

The contact section 116 is in this case, similarly to the mating contact section 516, designed to be substantially hollow-cylindrical, wherein the free end side of this (as far as possible) thick (current-carrying capacity) hollow cylinder forms the contacting surface 1160. The clamping section 514 and the contact section 516 with the contacting surface 1160 comprise a (coaxial) through recess 113 in the contact device 11, in which the mechanical clamping screw device 12 can be accommodated. In this case, the through recess 113 can be designed to be stepped, wherein the through recess 113 has a smaller radius in the clamping section 114, for centring reasons (screw body 220, cf. below) for the clamping screw device 12 than the through recess 113 has in the contact section 116. Other configurations of the contact device 11 can naturally be used. - Embodiments of the clamping screw device 12 are explained in more detail further below with reference to figs 2 to 5.

In the case of a line connector 1 which is ready for use, a high-current line 22 preferably of a high-current line connection 20 is electrically connected to the contact section 112 of the contact device 11 of the high-current connector 10, wherein the high-current line connection 20 preferably comprises an electromagnetic shielding 24, which is arranged between two layers of electrical insulation of the high-current line connection 20 (cf. fig. 1).

The line connector 1 comprises at least one high-current connector 10 having an embodiment of the clamping screw device 12. In addition, the line connector 1 can comprise, in addition to the one high-current connector 10, a second high-current connector (10), which is designed in accordance with the invention [10, (20,) 10; ...] or not [10, (20,) ...; ..., (20,) 10] in accordance with the invention. In this case, it is naturally also possible for a high-current line connection 20 to be used which is different from the one illustrated.

The contact device 11 is preferably accommodated with the high-current line 22, which is preferably materially integrally fixed thereto, in an electrically insulating cladding 13. In this case, preferably in addition the transition region to the high-current line 22 and therefore a longitudinal end section of the high-current line 22 is also accommodated in the insulating cladding 13. The insulating cladding 13 can comprise two cladding parts 131, 132, in particular an upper cladding part 131 and a lower cladding part 132.

Preferably, an electromagnetic shielding 14 of the high-current connector 10 is arranged on the outside on the electrically insulating cladding 13, wherein this electromagnetic shielding 14 makes electrical contact with the electromagnetic shielding 24 of the high-current line 22. In addition, electrical contact is made with the electromagnetic shielding 14 of the high-current connector 10 by an electromagnetic shielding of the high-current mating connector 50 in a plugged-together state of the high-current connector 10 and the high-current mating connector 50. The electromagnetic shielding 14 can comprise two shield parts 141, 142, in particular an upper shield part 141 and a lower shield part 142.

This stack comprising contact device 11, including longitudinal end section of the high-current line 22, its electrically insulating cladding 13 and its electromagnetic shielding 14 is preferably accommodated in a housing 15. In one region of the clamping section 114 of the contact device 11, the housing 15 comprises a through recess 153, in which the clamping screw device 12 is accommodated, preferably in anti-loss fashion (anti-loss means 1532, for example in the form of a cap with an access opening for a tool).

An inner side 1530 of the through recess 153 can be in the form of a sealing face 1530 for a seal 216 of the clamping screw device 12. As an alternative or in addition, this can be designed conversely, i. e., the through recess 153 comprises a seal on the inside for the clamping screw device 12. The through recess 153 can be coverable by a protective cap 154. In this case, the protective cap 154 can be in the form of a protective cap slider 154. Another protective cap 154, for example a foldable protective cap, a separate protective cap etc., can naturally be used.

The clamping screw device 12, cf. figs 2 to 5 and in particular figs 3 and 5, in screwed-together interaction with the mating clamping screw device 52, serves the purpose of mechanically, permanently and fixedly clamping the contacting surface 1160 of the contact section 116 of the contact device 11 (responsible: clamping screw device 12) against the mating contact-making area 5160 of the mating contact section 516 of the mating contact device 51 (responsible: mating clamping screw device 52) for transmitting high electrical currents and voltages. For this purpose, the clamping screw device 12 and the mating clamping screw device 52 are screwed to one another, wherein the clamping screw device 12 (external thread) is preferably screwed into the mating clamping screw device 52 (internal thread). This can naturally be designed kinematically in reverse fashion.

In this case, starting from the clamping screw device 12 (chin 211, cf. below) which rests fixedly on the outside on the clamping section 114 of the contact device 11, and starting from the mating clamping screw device 52 which rests fixedly on the outside on the mating clamping section 514 of the mating contact device 51 (chin 611), the contact section 116 and the mating contact section 516 are pressed one on top of the other and held fixedly against one another. In this case, the screw composite consisting of the clamping screw device 12 and the mating clamping screw device 52 extends through the through recesses 113, 513 in the contact section 116 and the mating contact section 516.

The respective embodiment, cf. fig. 3 and fig. 5, of the clamping screw device 12 comprises a clamping screw 200 in the form of a partially threaded screw 200 (bolt 200), which integrally comprises, one behind the other in the axial direction Ar, a screw head 210, a screw body 220 and preferably also an in particular pronounced screw foot 230. In this case, the screw foot 230 is in the form of a protrusion of the screw body 220 on which a touch guard 232 is provided. It is also possible to integrate the screw foot 230, for example in the form of a recess, in the screw body 220 and then to fit the touch guard 232 therein, which touch guard 232 then sits in the screw foot 230 and protrudes away from the screw body 220.

The screw body 220 in this case comprises a substantially smooth screw shank 222 for centring the clamping screw device 12 in the clamping section 114 of the contact device 11. The screw shank 222 merges with a threaded shank 224 having an external thread (possibly also internal thread), by means of which the clamping screw device 12 can be screwed into the mating clamping screw device 52. In this case, the screw head 210 rests with a chin 211 opposite the contact section 116 on the clamping section 114 and prevents the clamping screw device 12 from being able to be plugged through the through recess 113 in the contact device 11.

The screw head 210 is at least partially, but preferably up to the chin 211, embedded in an electrical insulation 212, wherein the screw head 210 and the electrical insulation 212 form a fixed composite. The screw head 210 can in this case comprise an exclusively positive form (present material of the screw head 210, for example an outer n-sided profile or an analogue thereof, fig. 3) or an additionally negative form (absent material of the screw head 210, for example an inner n-sided profile or an analogue thereof, fig. 5).

The screw head 210 can comprise, independently of its form, an electromagnetic shielding 214 and/or a seal 216. The electromagnetic shielding 214 can be embedded in the electrical insulation 212 or provided on the outside on the electrical insulation 212. In this case, the electromagnetic shielding 214 extends far in the axial direction Ar in the direction of the screw body 220 such that electrical contact can be made with the electromagnetic shielding 14 of the high-current connector 10. In this case, the shielding 214 can make direct electrical contact with the shielding 14 and/or an electrical contact can be produced with the aid of an additional component part therebetween, such as, for example, an EMC seal. In addition, the electromagnetic shielding 214 surrounds the electrical insulation 212 and/or the screw head 210 preferably completely in the circumferential direction Ur.

The seal 216 is preferably provided over the full circumference in the circumferential direction Ur radially outwards on the screw head 210, wherein the seal 216 sits either on the electrical insulation 212 (fig. 3) or on the electromagnetic shielding 14 (fig. 5). In this case, the seal 216 can be a separate component part or can be connected in materially fixed fashion, in particular by means of an injection-moulding process, to the screw head 210 or to the electrical shielding 14.

The screw head 210 of the clamping screw 200 of the first embodiment (fig. 3) comprises an outer profile which merges with a collar radially Rr outwards on the screw shank 222 and whose lower rim forms the chin 211. The electrical insulation 212 is provided on the outside on this outer profile, wherein a circumferential wall 2120 of the electrical insulation 212 surrounds the electrically insulated screw head 210 preferably completely in the circumferential direction Ur with a radial Rr spacing. The circumferential wall 2120 imparts a pot shape to the electrical insulation 212.

A seal 216 is arranged on a radial Rr circumferential surface 2122 of the circumferential wall 2120, wherein preferably at least one sealing lip of the seal 216 protrudes radially Rr outwards. The clamping screw device 12 can be sealed against the sealing surface 1530 of the through recess 153 in the housing 15 by means of the seal 216 and the electrical insulation 212. - In addition, in this embodiment of the clamping screw 200, an electromagnetic shielding 214 can be used.

The screw head 210 of the clamping screw 200 of the second embodiment (fig. 5) comprises a pot-shaped inner profile which merges with a collar radially Rr outwards on the screw shank 222 and whose lower rim forms the chin 211. The electrical insulation 212 is arranged on the inside, on the end side and on the outside on this inner profile, wherein an outer circumferential wall 2120 of the electrical insulation 212 rests directly on an outside of the pot-shaped inner profile.

The electromagnetic shielding 214 is arranged on a radial Rr circumferential surface 2122 of the circumferential wall 2120, an axial Ar end side of the electrical insulation 212 and an inner wall of the electrical insulation 212 in the inner profile. A seal 216 is arranged on a radial Rr circumferential surface 2142 of the electromagnetic shielding 214, wherein preferably at least one sealing lip of the seal 216 protrudes radially Rr outwards. The clamping screw device 12 can be sealed against the sealing surface 1530 of the through recess 153 in the housing 15 by means of the seal 216 and the electrical insulation 212. - In addition, in this embodiment of the clamping screw 200, the electromagnetic shielding 214 can be omitted.

### List of reference symbols

- 0: electrical entity
- 1: (electrical) (high-current) line connector [10, (20,) ...; 10, (20,) 10; ..., (20,) 10]
- 10: (electrical) high-current connector
- 11: (electrical) (high-current) contact device
- 112: (electrical) contact section for high-current line 22
- 114: (mechanical) clamping section
- 113: through recess
- 116: (electrical) contact section with contacting surface 1160
- 1160: contacting surface
- 12: (mechanical) (high-current connection) clamping screw device
- 200: clamping screw, possibly in the form of a partially threaded screw (bolt)
- 210: screw head
- 211: chin
- 212: electrical insulation
- 2120: circumferential wall
- 2122: circumferential surface for electromagnetic shielding 214 or seal 216
- 2124: end face possibly for electromagnetic shielding 214
- 214: electromagnetic shielding
- 2142: circumferential surface possibly for seal 216
- 216: seal
- 220: screw body
- 222: screw shank
- 224: threaded shank with external or internal thread
- 230: screw foot
- 232: touch guard
- 13: electrically insulating cladding
- 131: cladding part, for example upper cladding part
- 132: cladding part, for example lower cladding part
- 14: electromagnetic shielding of the high-current connector 10
- 141: shield part, for example upper shield part
- 142: shield part, for example lower shield part
- 15: housing
- 153: through recess
- 1530: inner side, sealing face of the through recess 153
- 1532: anti-loss means
- 154: protective cap, protective cap slider
- 20: (electrical) high-current line connection
- 22: (electrical) high-current line
- 24: electromagnetic shielding of the high-current line 22
- 50: (electrical) high-current mating connector
- 51: (high-current) mating contact device
- 512: (electrical) mating contact section for high-current line
- 513: through recess
- 514: (mechanical) mating clamping section
- 516: (electrical) mating contact section with mating contact-making area 5160
- 5160: mating contact-making area
- 52: (mechanical) (high-current connection) mating clamping screw device
- 610: mating screw head
- 611: chin
- 620: mating screw body with internal or external thread
- 632: touch guard
- 55: housing
- Ar: axial direction clamping screw device 12 and mating clamping screw device 52
- Rr: radial direction clamping screw device 12 and mating clamping screw device 52
- Ur: circumferential direction clamping screw device 12 and mating clamping screw device 52

## Claims

1. Mechanical high-current connection clamping screw device (12) for an electrical high-current connector (10) suitable for the automotive sector, with
a clamping screw (200) which extends in an axial direction (Ar) of the clamping screw device (12) and is divided up into a rotatable screw head (210), a screwable screw body (220) and preferably a screw foot (230), wherein
the screw head (210) comprises an electrical insulation (212) on the outside, which comprises a seal (216), **characterised in that** the screw head (210) is embedded in the electrical insulation (212) which comprises a circumferential surface (2122) on which the seal (216) is directly or indirectly arranged radially outwards.

2. Mechanical high-current connection clamping screw device (12) according to claim 1, wherein the electrical insulation (212) is injection-moulded on the outside onto the screw head (210).

3. Mechanical high-current connection clamping screw device (12) according to claim 1 or 2, **characterized in that**:
• the screw head (210) comprises an outer profile or an inner profile for a screwdriving tool, wherein the screw head (210) sits fixedly in the electrical insulation (212),
• the seal (216) is in the form of a ring seal or sleeve seal having preferably at least one sealing lip, and/or
• the seal (216) is injection-moulded onto the electrical insulation (212).

4. Mechanical high-current connection clamping screw device (12) according to one of claims 1 to 3, **characterized in that**:
• the screw head (210) comprises a chin (211) configured to mechanically contact an electrical high-current contact device (11) of the high-current connector (10),
• the screw body (220) comprises a smooth screw shank (222) and a threaded shank (224) axially (Ar) adjoining the said screw shank (222), and/or
• the threaded shank (224) or the screw foot (230) comprises a touch guard (232) which protrudes away from the threaded shank (224).

5. Use of a mechanical high-current connection clamping screw device (12) for screwing an electrical high-current connector (10) to an electrical high-current mating connector (50), **characterised in that** the clamping screw device (12) is designed according to one of claims 1 to 4, wherein the high-current connector (10) is screwed to the high-current mating connector (50) by the high-current connection clamping screw device (12).

6. Use of the mechanical high-current connection clamping screw device (12) according to claim 5, **characterized in that**:
• the seal (216) is brought into sealing contact with an inner side (1530) of a through recess (153) of a housing (15) of the high-current connector (10), and
• the clamping screw device (12) is accommodated in the through recess (153) in the housing (15) in an anti-loss fashion.

7. Electrical high-current connector (10) for a high-current line (22) consisting of copper or aluminium, suitable for the automotive sector, comprising
a mechanical high-current connection clamping screw device (12) and an electrical high-current contact device (11) for making electrical contact with an electrical high-current mating contact device (51), wherein the contact device (11) can be clamped mechanically against the mating contact device (51) by means of the clamping screw device (12), **characterized in that**
the clamping screw device (12) of the high-current connector (10) is designed according to one of claims 1 to 4.

8. Electrical high-current connector (10) according to claim 7, **characterized in that**:
• the contact device (11) comprises an electrical contact section (112) for a high-current line (22), a mechanical clamping section (114) and an electrical contact section (116) with a contacting surface (1160), and/or
• the high-current connector (10) comprises a housing (15) with a through recess (153) for inserting the clamping screw device (12).

9. Electrical high-current connector (10) according claim 7 or 8, **characterized in that**:
• an electromagnetic shielding (14) of the high-current connector (10) is provided on an electrically insulating cladding (13) of the contact device (11),
• the electrically insulating cladding (13) comprises two cladding parts (131, 132), which each comprise a shield part (141, 142) of the electromagnetic shielding (14) on the outside, and/or
• the two cladding parts (131, 132) are latched to one another, and the two shield parts (141, 142) are in electrically conductive contact with one another.

10. Electrical high-current connector (10) according to one of claims 7 to 9, **characterized in that**:
• the seal (216) of the clamping screw device (12) can be or is brought into sealing contact with an inner side (1530) of the through recess (153),• the housing (15) comprises two housing parts, between which the contact device (11) with its electrically insulating cladding (13) and the electromagnetic shielding (14) is accommodated, and/or
• the through recess (153) of the housing (15) can be covered by a protective cap (154), wherein the protective cap (154) is preferably in the form of a protective cap slider (154) bearing-mounted on the housing (15).

11. Electrical high-current connector (10) according to one of claims 7 to 10, **characterized in that** the high-current connector (10):
• is designed for permanent electrical currents of at least approximately: 100A, 200A, 300A, 400A, 750A, 1kA or 1.25kA,
• is designed for electrical voltages of at least approximately: 200V, 300V, 400V, 500V, 600V, 750V, 1kV, 1.25kV, 1.5kV, 1.75kV or 2 kV, and/or
• preferably in accordance with LV 214, meets the vibration requirements of the class or in accordance with the degree of severity: 2, 3 and/or 4.

12. Electrical high-current line connector (1), suitable for the automotive sector, **characterized in that**
the high-current line connector (1) comprises at least one mechanical high-current connection clamping screw device (12) according to one of claims 1 to 4, or at least one electrical high-current connector (10) according to one of claims 7 to 11.

13. Electrical high-current line connector (1) according to claim 12, **characterized in that**:
• the contact device (11) comprises an electrical high-current line connection (20) or an electrical high-current line (22) at its contact section (112),
• the electromagnetic shielding (14) of the high-current connector (10) shields a connecting region of the contact section (112) of the contact device (11) with the high-current line (22), and/or
• the line connector (1) comprises precisely two electrical high-current connectors (10).

14. Electrical high-current line connector (1) according to claim 13, **characterized in that**:
• the high-current line (22) is embedded in an electromagnetically shielded high-current line connection (20),
• the electromagnetic shielding (14) of the high-current connector (10) is in electrically conductive contact with an electromagnetic shielding (24) of the high-current line (22), and/or
• an electrical outer insulation of the high-current line (22) is sealed with respect to the housing (15) and is fixed by means of latching means.

15. Electrical entity (0) for the automotive sector, **characterized in that**
the entity (0) comprises a mechanical high-current connection clamping screw device (12) according to one of claims 1 to 4, an electrical high-current connector (10) according to one of claims 7 to 11 or an electrical high-current line connector (1) according to one of claims 12 to 14.

## Patentansprüche

1. Klemmschraubenvorrichtung (12) einer mechanischen Hochstromverbindung für einen elektrischen Hochstromverbinder (10), geeignet für den Automobilbereich, mit
einer Klemmschraube (200), die sich in einer axialen Richtung (Ar) der Klemmschraubenvorrichtung (12) erstreckt und in einen drehbaren Schraubenkopf (210), einen schraubbaren Schraubenkörper (220) und bevorzugt einen Schraubenfuß (230) unterteilt ist, wobei
der Schraubenkopf (210) außen eine elektrische Isolierung (212) umfasst, die eine Dichtung (216) umfasst, **dadurch gekennzeichnet, dass**
der Schraubenkopf (210) in die elektrische Isolierung (212) eingebettet ist, die eine Umfangsfläche (2122) umfasst, auf der die Dichtung (216) direkt oder indirekt radial auswärts angeordnet ist.

2. Klemmschraubenvorrichtung (12) einer mechanischen Hochstromverbindung nach Anspruch 1,
wobei die elektrische Isolierung (212) außen auf den Schraubenkopf (210) aufgespritzt ist.

3. Klemmschraubenvorrichtung (12) einer mechanischen Hochstromverbindung nach Anspruch 1 oder 2, **dadurch gekennzeichnet, dass**:
• der Schraubenkopf (210) ein Außenprofil oder ein Innenprofil für ein Schraubendrehwerkzeug umfasst, wobei der Schraubenkopf (210) fest in der elektrischen Isolierung (212) sitzt,
• die Dichtung (216) in Form einer Ringdichtung oder einer Hülsendichtung mit bevorzugt mindestens einer Dichtlippe ausgebildet ist, und/oder
• die Dichtung (216) auf die elektrische Isolierung (212) aufgespritzt ist.

4. Klemmschraubenvorrichtung (12) einer mechanischen Hochstromverbindung nach einem der Ansprüche 1 bis 3, **dadurch gekennzeichnet, dass**:
• der Schraubenkopf (210) einen Ansatz (211) umfasst, der so konfiguriert ist, dass er mechanisch mit einer elektrischen Hochstrom-Kontaktvorrichtung (11) des Hochstromverbinders (10) in Kontakt kommt,
• der Schraubenkörper (220) einen glatten Schraubenschaft (222) und einen axial (Ar) an den Schraubenschaft (222) anschließenden Gewindeschaft (224) umfasst und/oder
• der Gewindeschaft (224) oder der Schraubenfuß (230) einen Berührungsschutz (232) umfasst, der vom Gewindeschaft (224) absteht.

5. Verwendung einer Klemmschraubenvorrichtung (12) für eine mechanische Hochstromverbindung zum Verschrauben eines elektrischen Hochstromverbinders (10) mit einem elektrischen Hochstrom-Gegenverbinder (50), **dadurch gekennzeichnet, dass**
die Klemmschraubenvorrichtung (12) nach einem der Ansprüche 1 bis 4 ausgebildet ist,
wobei
der Hochstromverbinder (10) durch die Hochstromverbindungs-Klemmschraubenvorrichtung (12) mit dem Hochstrom-Gegenverbinder (50) verschraubt wird.

6. Verwendung der Klemmschraubenvorrichtung (12) einer mechanischen Hochstromverbindung nach Anspruch 5, **dadurch gekennzeichnet, dass**:
• die Dichtung (216) in Dichtungskontakt mit einer Innenseite (1530) einer Durchgangsausnehmung (153) eines Gehäuses (15) des Hochstromverbinders (10) gebracht wird und
• die Klemmschraubenvorrichtung (12) in der Durchgangsausnehmung (153) im Gehäuse (15) verlustsicher aufgenommen wird.

7. Elektrischer Hochstromverbinder (10) für eine Hochstromleitung (22) aus Kupfer oder Aluminium, geeignet für den Automobilbereich, umfassend
eine Klemmschraubenvorrichtung (12) einer mechanischen Hochstromverbindung und eine elektrische Hochstrom-Kontaktvorrichtung (11) zum Herstellen eines elektrischen Kontakts mit einer elektrischen Hochstrom-Gegenkontaktvorrichtung (51), wobei die Kontaktvorrichtung (11) mittels der Klemmschraubenvorrichtung (12) mechanisch gegen die Gegenkontaktvorrichtung (51) klemmbar ist, **dadurch gekennzeichnet, dass**
die Klemmschraubenvorrichtung (12) des Hochstromverbinders (10) nach einem der Ansprüche 1 bis 4 ausgebildet ist.

8. Elektrischer Hochstromverbinder (10) nach Anspruch 7, **dadurch gekennzeichnet, dass**:
• die Kontaktvorrichtung (11) einen elektrischen Kontaktabschnitt (112) für eine Hochstromleitung (22), einen mechanischen Klemmabschnitt (114) und einen elektrischen Kontaktabschnitt (116) mit einer Kontaktfläche (1160) umfasst und/oder
• der Hochstromverbinder (10) ein Gehäuse (15) mit einer Durchgangsausnehmung (153) zum Einsetzen der Klemmschraubenvorrichtung (12) umfasst.

9. Elektrischer Hochstromverbinder (10) nach Anspruch 7 oder 8, **dadurch gekennzeichnet, dass**:
• eine elektromagnetische Abschirmung (14) des Hochstromverbinders (10) an einer elektrisch isolierenden Ummantelung (13) der Kontaktvorrichtung (11) bereitgestellt ist,
• die elektrisch isolierende Ummantelung (13) zwei Ummantelungsteile (131, 132) umfasst, die außen jeweils einen Abschirmteil (141, 142) der elektromagnetischen Abschirmung (14) umfassen, und/oder
• die beiden Ummantelungsteile (131, 132) miteinander verrastet sind und die beiden Abschirmteile (141, 142) in elektrisch leitendem Kontakt miteinander stehen.

10. Elektrischer Hochstromverbinder (10) nach einem der Ansprüche 7 bis 9, **dadurch gekennzeichnet, dass**:
• die Dichtung (216) der Klemmschraubenvorrichtung (12) mit einer Innenseite (1530) der Durchgangsausnehmung (153) in Dichtungskontakt bringbar ist oder gebracht wird,
• das Gehäuse (15) zwei Gehäuseteile umfasst, zwischen denen die Kontaktvorrichtung (11) mit ihrer elektrisch isolierenden Ummantelung (13) und der elektromagnetischen Abschirmung (14) aufgenommen ist, und/oder
• die Durchgangsausnehmung (153) des Gehäuses (15) durch eine Schutzkappe (154) abdeckbar ist, wobei die Schutzkappe (154) bevorzugt als am Gehäuse (15) gelagerter Schutzkappenschieber (154) ausgebildet ist.

11. Elektrischer Hochstromverbinder (10) nach einem der Ansprüche 7 bis 10, **dadurch gekennzeichnet, dass** der Hochstromverbinder (10):
• für Dauerstromstärken von mindestens ungefähr: 100A, 200A, 300A, 400A, 750A, 1kA oder 1,25kA ausgelegt ist,
• für elektrische Spannungen von mindestens ungefähr: 200V, 300V, 400V, 500V, 600V, 750V, 1kV, 1,25kV, 1,5kV, 1,75kV oder 2 kV ausgelegt ist und/oder
• bevorzugt gemäß LV 214 die Vibrationsanforderungen der Klasse oder gemäß dem Schweregrad: 2, 3 und/oder 4 erfüllt.

12. Elektrischer Hochstromleitungsverbinder (1), geeignet für den Automobilbereich, **dadurch gekennzeichnet, dass**
der Hochstromleitungsverbinder (1) mindestens eine Klemmschraubenvorrichtung (12) einer mechanischen Hochstromverbindung nach einem der Ansprüche 1 bis 4 oder mindestens einen elektrischen Hochstromverbinder (10) nach einem der Ansprüche 7 bis 11 umfasst.

13. Elektrischer Hochstromleitungsverbinder (1) nach Anspruch 12, **dadurch gekennzeichnet, dass**:
• die Kontaktvorrichtung (11) an ihrem Kontaktabschnitt (112) eine elektrische Hochstromleitungsverbindung (20) oder eine elektrische Hochstromleitung (22) umfasst,
• die elektromagnetische Abschirmung (14) des Hochstromverbinders (10) einen Verbindungsbereich des Kontaktabschnitts (112) der Kontaktvorrichtung (11) mit der Hochstromleitung (22) abschirmt und/oder
• der Leitungsverbinder (1) genau zwei elektrische Hochstromverbinder (10) umfasst.

14. Elektrischer Hochstromleitungsverbinder (1) nach Anspruch 13, **dadurch gekennzeichnet, dass**:
• die Hochstromleitung (22) in eine elektromagnetisch abgeschirmte Hochstromleitungsverbindung (20) eingebettet ist,
• die elektromagnetische Abschirmung (14) des Hochstromverbinders (10) in elektrisch leitendem Kontakt mit einer elektromagnetischen Abschirmung (24) der Hochstromleitung (22) steht und/oder
• eine elektrische Außenisolierung der Hochstromleitung (22) gegenüber dem Gehäuse (15) abgedichtet und mittels Rastmitteln fixiert ist.

15. Elektrische Einheit (0) für den Automobilbereich, **dadurch gekennzeichnet, dass**
die Einheit (0) eine Klemmschraubenvorrichtung (12) einer mechanischen Hochstromverbindung nach einem der Ansprüche 1 bis 4, einen elektrischen Hochstromverbinder (10) nach einem der Ansprüche 7 bis 11 oder einen elektrischen Hochstromleitungsverbinder (1) nach einem der Ansprüche 12 bis 14 umfasst.

## Revendications

1. Dispositif mécanique de vis de serrage de connexion à courant élevé (12) pour un connecteur électrique à courant élevé (10) adapté au secteur automobile, avec
une vis de serrage (200) s'étendant dans une direction axiale (Ar) du dispositif de vis de serrage (12) et divisée en une tête de vis rotative (210), un corps de vis pouvant être vissé (220) et de préférence un pied de vis (230), dans lequel
la tête de vis(210) comprend extérieurement une isolation électrique (212) qui comprend un joint d'étanchéité (216), **caractérisé en ce que**
la tête de vis(210) est encastrée dans l'isolation électrique (212) qui comprend une surface circonférentielle (2122) sur laquelle le joint d'étanchéité (216) est disposé directement ou indirectement de manière radiale vers l'extérieur.

2. Dispositif mécanique de vis de serrage de connexion à courant élevé (12) selon la revendication 1,
dans lequel l'isolation électrique (212) est moulée par injection sur l'extérieur de la tête de vis (210).

3. Dispositif mécanique de vis de serrage de connexion à courant élevé (12) selon la revendication 1 ou 2, **caractérisé en ce que** :
• la tête de vis (210) comprend un profil extérieur ou un profil intérieur pour un outil de vissage, la tête de vis (210) étant fixée dans l'isolation électrique (212),
• le joint d'étanchéité (216) se présente sous la forme d'un joint annulaire ou d'un joint à manchon comportant de préférence au moins une lèvre d'étanchéité, et/ou
• le joint d'étanchéité (216) est moulé par injection sur l'isolation électrique (212).

4. Dispositif mécanique de vis de serrage de connexion à courant élevé (12) selon l'une des revendications 1 à 3, **caractérisé en ce que** :
• la tête de vis (210) comprend une mentonnière (211) conçue pour entrer en contact mécanique avec un dispositif de contact électrique à courant élevé (11) du connecteur à courant élevé (10),
• le corps de vis (220) comprend une tige de vis lisse (222) et une tige filetée (224) axialement (Ar) contiguë à ladite tige de vis (222), et/ou
• la tige filetée (224) ou le pied de vis (230) comprend une protection contre le contact (232) qui fait saillie à l'opposé de la tige filetée (224).

5. Utilisation d'un dispositif mécanique de vis de serrage (12) de connexion à courant élevé pour visser un connecteur électrique à courant élevé (10) sur un connecteur électrique homologue à courant élevé (50), **caractérisée en ce que**
le dispositif de vis de serrage (12) est réalisé selon l'une des revendications 1 à 4,
où
le connecteur à courant élevé (10) est vissé sur le connecteur homologue à courant élevé (50) par le dispositif de vis de serrage de connexion à courant élevé (12).

6. Utilisation du dispositif mécanique de vis de serrage de connexion à courant élevé (12) selon la revendication 5, **caractérisée en ce que** :
• le joint d'étanchéité (216) est amené en contact étanche avec un côté interne (1530) d'un évidement traversant (153) d'un boîtier (15) du connecteur à courant élevé (10), et
• le dispositif de vis de serrage (12) est reçu dans l'évidement traversant (153) du boîtier (15) sans perte.

7. Connecteur électrique à courant élevé (10) pour une ligne à courant élevé (22) en cuivre ou en aluminium, adapté au secteur automobile, comprenant
un dispositif mécanique de vis de serrage (12) de connexion à courant élevé et un dispositif de contact électrique à courant élevé (11) pour établir un contact électrique avec un dispositif de contact électrique homologue à courant élevé (51), le dispositif de contact (11) pouvant être serré mécaniquement contre le dispositif de contact homologue (51) au moyen du dispositif de vis de serrage (12), **caractérisé en ce que**
le dispositif de vis de serrage (12) du connecteur à courant élevé (10) est réalisé selon l'une des revendications 1 à 4.

8. Connecteur électrique à courant élevé (10) selon la revendication 7, **caractérisé en ce que** :
• le dispositif de contact (11) comprend une section de contact électrique (112) pour une ligne à courant élevé (22), une section de serrage mécanique (114) et une section de contact électrique (116) avec une surface de contact (1160), et/ou
• le connecteur à courant élevé (10) comprend un boîtier (15) doté d'un évidement traversant (153) pour l'insertion du dispositif de vis de serrage (12).

9. Connecteur électrique à courant élevé (10) selon la revendication 7 ou 8, **caractérisé en ce que** :
• un blindage électromagnétique (14) du connecteur à courant élevé (10) est prévu sur une gaine électriquement isolante (13) du dispositif de contact (11),
• la gaine électriquement isolante (13) comprend deux parties de gaine (131, 132), qui comprennent chacune une partie de blindage (141, 142) du blindage électromagnétique (14) à l'extérieur, et/ou
• les deux parties de gaine (131, 132) sont verrouillées l'une avec l'autre, et les deux parties de blindage (141, 142) sont en contact électriquement conducteur l'une avec l'autre.

10. Connecteur électrique à courant élevé (10) selon l'une des revendications 7 à 9, **caractérisé en ce que** :
• le joint d'étanchéité (216) du dispositif de vis de serrage (12) peut être ou est amené en contact étanche avec un côté intérieur (1530) de l'évidement traversant (153),
• le boîtier (15) comprend deux parties de boîtier entre lesquelles est reçu le dispositif de contact (11) avec sa gaine électriquement isolante (13) et le blindage électromagnétique (14), et/ou
• l'évidement traversant (153) du boîtier (15) peut être recouvert par un capuchon de protection (154), le capuchon de protection (154) étant de préférence sous la forme d'une glissière de capuchon de protection (154) montée sur le boîtier (15).

11. Connecteur électrique (10) à courant élevé selon l'une des revendications 7 à 10, **caractérisé en ce que** le connecteur (10) à courant élevé :
• est conçu pour des courants électriques permanents d'au moins environ : 100 A, 200 A, 300 A, 400 A, 750 A, 1 kA ou 1,25 kA,
• est conçu pour des tensions électriques d'au moins environ : 200 V, 300 V, 400 V, 500 V, 600 V, 750 V, 1 kV, 1,25 kV, 1,5 kV, 1,75 kV ou 2 kV, et/ou
• de préférence conformément à LV 214, répond aux exigences de vibration de la classe ou conformément au degré de gravité : 2, 3 et/ou 4.

12. Connecteur électrique de ligne à courant élevé (1), adapté au secteur automobile, **caractérisé en ce que**
le connecteur de ligne à courant élevé (1) comprend au moins un dispositif mécanique de vis de serrage de connexion à courant élevé (12) selon l'une des revendications 1 à 4, ou au moins un connecteur électrique à courant élevé (10) selon l'une des revendications 7 à 11.

13. Connecteur électrique de ligne à courant élevé (1) selon la revendication 12, **caractérisé en ce que** :
• le dispositif de contact (11) comprend une connexion de ligne électrique à courant élevé (20) ou une ligne électrique à courant élevé (22) au niveau de sa section de contact (112),
• le blindage électromagnétique (14) du connecteur à courant élevé (10) protège une région de connexion de la section de contact (112) du dispositif de contact (11) comprenant la ligne à courant élevé (22), et/ou
• le connecteur de ligne (1) comprend précisément deux connecteurs électriques à courant élevé (10).

14. Connecteur électrique de ligne à courant élevé (1) selon la revendication 13, **caractérisé en ce que** :
• la ligne à courant élevé (22) est encastrée dans une connexion de ligne à courant élevé à blindage électromagnétique (20),
• le blindage électromagnétique (14) du connecteur à courant élevé (10) est en contact électriquement conducteur avec un blindage électromagnétique (24) de la ligne à courant élevé (22), et/ou
• une isolation électrique extérieure de la ligne à courant élevé (22) est étanche par rapport au boîtier (15) et fixée à l'aide de moyens de verrouillage.

15. Entité électrique (0) pour le secteur automobile, **caractérisée en ce que**
l'entité (0) comprend un dispositif mécanique de vis de serrage de connexion à courant élevé (12) selon l'une des revendications 1 à 4, un connecteur électrique à courant élevé (10) selon l'une des revendications 7 à 11 ou un connecteur électrique de ligne à courant élevé (1) selon l'une des revendications 12 à 14.
